# EUROPÄISCHE PATENTANMELDUNG

(11) **EP 1 411 449 A2**
(43) Veröffentlichungstag der Anmeldung: **21.04.2004**
(21) Anmeldenummer: 03019420.3
(22) Anmeldetag: 28.08.2003
(51) Int. Cl.: G06F 17/50

(54) **Werteberechnung mittels Hierarchischer Netze**

(30) Priorität: 10.10.2002 DE 10247748
(71) Anmelder: Metzger, Uwe, 85567 Grafing (DE)
(72) Erfinder: Metzger, Uwe, 85567 Grafing (DE)

(57) **Zusammenfassung**

Die Erfindung betrifft ein Verfahren, eine Vorrichtung und ein Computerprogrammprodukt zur Werteberechnung mittels mindestens zweier hierarchischer Netze. Ein beispielhaftes Anwendungsgebiet der Erfindung ist die Schaffung eines computergestützten Werkzeuges zur Planung, Simulation und Optimierung von Produkten, Prozessen oder Dienstleistungen.
Die Erfindung geht von der Grundidee aus, ein Berechnungsverfahren bereitzustellen, bei dem hierarchische Netze über mindestens eine gemeinsame Netzebene kombiniert werden und bei dem die Werteberechnung netzübergreifend erfolgt. Dies heißt, dass ein bei in einem Netz zu berechnender Wert in Abhängigkeit von mindestens einem anderen Wert berechnet wird, der sich in einem anderen Netz befindet. Der Datenfluß bei dieser Berechnung erfolgt entlang der Verbindungen innerhalb der Netze und über die mindestens eine gemeinsame Netzebene hinweg.

## Beschreibung

Die Erfindung betrifft ein Verfahren, eine Vorrichtung und ein Computerprogrammprodukt zur Werteberechnung mittels mindestens zweier hierarchischer Netze. Ein beispielhaftes Anwendungsgebiet der Erfindung ist die Schaffung eines computergestützten Werkzeuges zur Planung, Simulation und Optimierung von Produkten, Prozessen oder Dienstleistungen.

Die Darstellung von Funktionsbäumen oder Funktionsstrukturen ist ein aus der Wertanalyse bekanntes Verfahren zur systematischen und marktorientierten Analyse von Produkten, Prozessen oder Dienstleistungen. Je nach Schwerpunkt und Ausprägung werden die Funktionen nach bestimmten markt- oder kundenspezifischen Kriterien bewertet und gewichtet. So sind beispielsweise Managementverfahren wie Target Costing oder Quality Functional Deployment bekannt, die entsprechende Funktionen einzelnen Baugruppen oder Komponenten von Produkten oder Dienstleistungen gegenüber stellen und daraus nach bestimmten Algorithmen konkrete Auswertungen, wie beispielsweise Funktionsmatrizen und Portfolios ableiten.

Dem gegenüber besteht bei der Konzeption und Umsetzung von Produkten und Prozessen immer wieder das Problem, die komplexen und vielschichtigen technischen, baulichen oder prozessualen Zusammenhänge, Abläufe und Strukturen systematisch und übersichtlich darzustellen. So sind beispielsweise Stücklisten von Produkten in sogenannten Strukturstücklisten hinterlegt, die eine hierarchische Übersicht, beispielsweise über die Veredelungs- und Montagestufen im Fertigungsprozess vom Rohstoff über Halbzeuge und Einzelteile bis hin zu Baugruppen und kompletten Modulen geben. Solche Strukturstücklisten sind meist in Warenwirtschaftssystemen oder auch in CAD-Systemen hinterlegt.

In der Literatur (Harvard Business Manager 03/2000; Göpfert, Steinbrecher; Modulare Produktentwicklung) wird die Verknüpfung zweier hierarchischer Netze, der Funktionsstruktur mit der Baustruktur oder der physikalischen Struktur eines Produktes beschrieben. Die derartige Kopplung beider Strukturen zu zwei hierarchischen Netzen eröffnet neue Sichtweisen bei der ganzheitlichen Betrachtung funktionaler und technischer Zusammenhänge. So können beispielsweise den Kundenfunktionen nicht nur die Komponenten, sondern die physischen Produktkomponenten oder Baugruppen sowie die gesamte Produktstruktur mitsamt ihren Fertigungs- und Montageprozessen gegenüber gestellt werden. Damit entsteht eine durchgängige Darstellung, beispielsweise von den marktseitigen Kundenanforderungen und Kundenfunktionen über die Produktkomponenten bis hin zur physikalischen Produktstruktur, die sich beispielsweise an den Montage- und Fertigungsprozessen orientiert.

Die Erfindung ist durch die unabhängigen Ansprüche definiert. Die abhängigen Ansprüche definieren bevorzugte Ausgestaltungen der Erfindung.

Die Erfindung geht von der Grundidee aus, ein Berechnungsverfahren bereitzustellen, bei dem hierarchische Netze über mindestens eine gemeinsame Netzebene kombiniert werden und bei dem die Werteberechnung netzübergreifend erfolgt. Dies heißt, dass ein in einem Netz zu berechnender Wert in Abhängigkeit von mindestens einem anderen Wert berechnet wird, der sich in einem anderen Netz befindet. Der Datenfluß bei dieser Berechnung erfolgt entlang der Verbindungen innerhalb der Netze und über die mindestens eine gemeinsame Netzebene hinweg.

Eine gemeinsame Netzebene ist in bevorzugten Ausgestaltungen der Erfindung dadurch definiert, dass Elemente und/oder Verbindungen zweier Netze, die bezüglich einer vorgegebenen Kategorie Werte aufweisen, welche in einer vorgegebenen Beziehung zueinander stehen, einander zugeordnet werden. Beispielsweise kann die gemeinsame Netzebene durch die Kategorie "Komponente" der Netzelemente definiert sein. Elemente zweier Netze, die bezüglich dieser Kategorie z.B. den gleichen Wert aufweisen (also z.B. den Wert "Maus" in der Kategorie "Komponente"), werden als einander zugeordnet oder identisch angesehen. Derartige Elemente und/oder Verbindungen stellen somit die Verknüpfungsstellen zwischen den Netzen dar, über die die Werteversorgung für die netzübergreifende Berechnung erfolgt.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, beispielsweise ein Halbleiterspeicher oder eine Diskette oder eine CD-ROM, auf dem ein Programm zur Ausführung des erfindungsgemäßen Verfahrens gespeichert ist. Das Computerprogrammprodukt kann jedoch auch ein nicht-körperliches Medium sein, beispielsweise ein über ein Computernetzwerk übermitteltes Signal.

Die Vorrichtung und das Computerprogrammprodukt weisen in bevorzugten Weiterbildungen Merkmale auf, die den in den abhängigen Verfahrensansprüchen genannten Merkmalen entsprechen.

Weitere Merkmale, Aufgaben und Vorteile der Erfindung ergeben sich aus der folgenden Beschreibung eines Ausführungsbeispiels. Es wird auf die schematischen Zeichnungen verwiesen, in denen zeigen:
Fig. 1 eine beispielhafte Funktionsstruktur mit Hauptfunktionen und Teilfunktionen,
Fig. 2 eine beispielhafte Funktions- und Baumstruktur,
Fig. 3 eine beispielhafte Produktstruktur mit Komponentenkosten,
Fig. 4 die Produktstruktur von Fig. 3 mit berechneten Kostenwerten,
Fig. 5 eine generische Netzstruktur,
Fig. 6 eine beispielhafte Struktur elektrischer Schnittstellen eines Computers,
Fig. 7 ein beispielhaftes Zielkostenkontrolldiagramm,
Fig. 8 eine beispielhafte Prozessstruktur,
Fig. 9 eine Tabelle mit beispielhaften Einträgen für Komponenten mit Kategorien und Werten,
Fig. 10 eine Tabelle mit beispielhaften Einträgen für Verbindungen mit Kategorien und Werten,
Fig. 11 eine beispielhafte Funktionen/Komponenten-Matrix,
Fig. 12 eine beispielhafte Komponenten/Montageeinheiten-Matrix,
Fig. 13 eine beispielhafte Funktionen/Montageeinheiten-Matrix,
Fig. 14 eine beispielhafte Funktionskostenmatrix, und
Fig. 15 ein Flussdiagramm eines generischen Modells zur netzübergreifenden Werteberechnung.

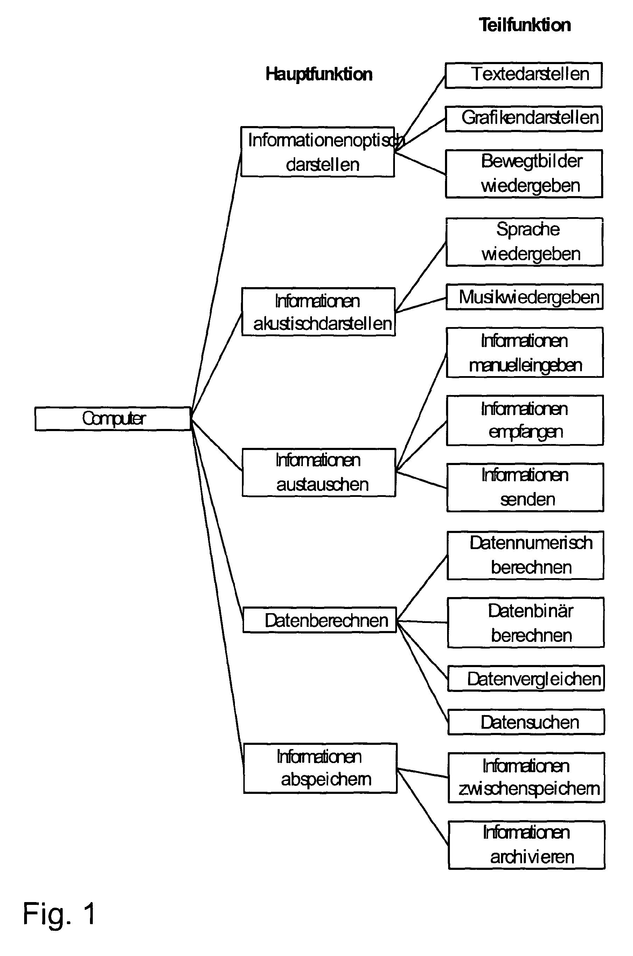

Das erfindungsgemäße Berechnungs- und Modellierungswerkzeug verwendet eine Verknüpfung mindestens zweier hierarchischer Netze, wie beispielsweise die Funktionsstruktur und die Komponenten- oder Baustruktur eines Produktes. Fig. 1 stellt eine Funktionsstruktur am Beispiel eines Computers dar, der für den Kunden beispielsweise die Hauptfunktionen "Informationen darstellen" oder "Daten berechnen" erfüllt. Solche Funktionen lassen sich weiter in sogenannte Teilfunktionen detaillieren, wie zum Beispiel "Texte darstellen" oder "Bewegte Bilder darstellen" oder "Sprache wiedergeben".

Die Funktionsanalyse und die Darstellung der Funktionsstruktur hat die Aufgabe, für alle an der Entwicklung, Produktion und am Verkauf des Computers beteiligten Personen, von der Konstruktion über die Softwareentwickler bis hin zu Fertigungs-, Vertriebs- und Servicemitarbeitern, Klarheit über die vom Kunden geforderten und wahrgenommen Funktionen zu schaffen und so die Sichtweise des Kunden strukturiert und übersichtlich darzustellen. Gerade in den technischen Bereichen der Unternehmen ist es meist nicht üblich, in Kundenfunktionen zu denken. Doch genau die systematische funktionale Beschreibung des Computers aus Kundensicht eröffnet gerade für die technischen Bereiche einen Blickwinkel, bei dem zunächst nicht die gewohnten technischen Probleme im Vordergrund stehen, sondern der Kunde, seine Bedürfnisse und die Funktionalität des Computers aus Kundensicht. Eine derart systematische und konsequente marktorientierte Betrachtungsweise führt meist auch zu innovativen und kundenorientierten Lösungsansätzen.

Die erfindungsgemäße Lösung stellt ein Werkzeug bereit, um mittels eines üblichen Computers Modellierungen und Berechnungen mittels mindestens zwei hierarchischen Netzen durchzuführen. Beispielsweise kann mit der Funktionsstruktur von Fig. 1, die als erstes hierarchisches Netz vorliegt, mindestens ein zweites hierarchisches Netz, wie beispielsweise die Komponenten- oder Baustruktur des Produktes, die Montage- und Fertigungsschritte von Baugruppen und Modulen systematisch darstellt, verknüpft werden.

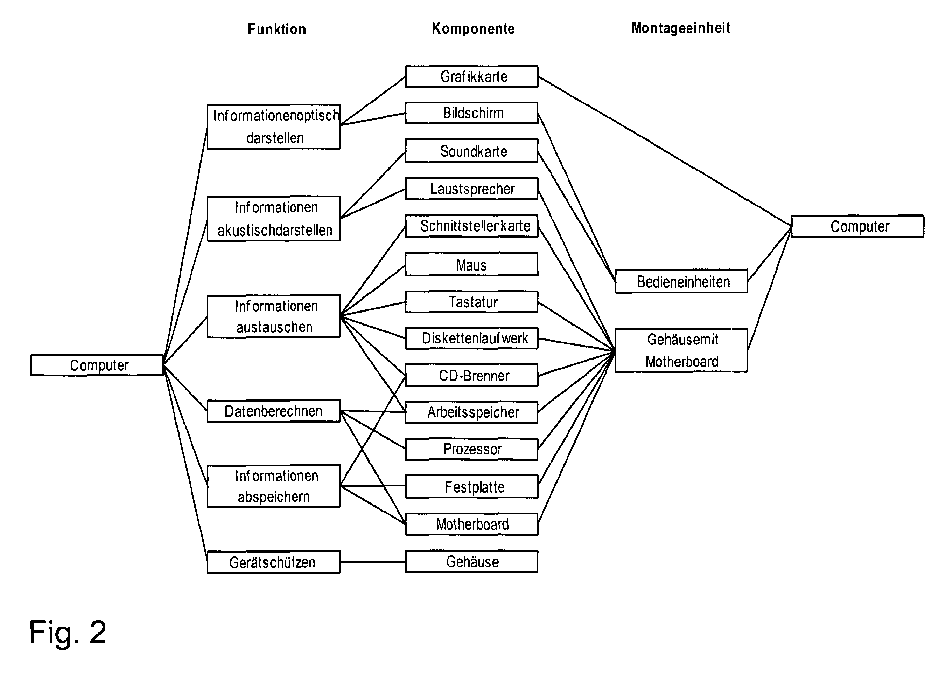

Fig. 2 zeigt die beiden miteinander verknüpften hierarchischen Netze am Beispiel eines Computers. Die Funktion "Informationen optisch darstellen" wird im wesentlichen von den Komponenten "Bildschirm" und "Grafikkarte" erfüllt. Selbstverständlich ist zur Funktionserfüllung der optischen Darstellung auch der Prozessor oder der Arbeitsspeicher erforderlich, doch ihre Bedeutung an der Erfüllung ist wesentlich geringer und deshalb in der dargestellten Netzstruktur nicht hinterlegt. Dementsprechend ist die Funktion "Informationen speichern" mit den Komponenten "CD-Brenner", "Festplatte" und "Motherboard" verbunden. Eine genauere Zuordnung ergibt sich beispielsweise dadurch, dass die Verbindungen zwischen den Elementen mit einem Faktor, beispielsweise dem Gewicht der Verbindung, gewichtet werden können und so eine beliebig genaue Zuordnung ermöglicht, die wiederum Basis für weitere algorithmische Auswertungen bieten kann.

Im genannten Beispiel wurden die Komponenten des Computers aus Fig. 2 nicht den Teilfunktionen der Funktionsstruktur aus Fig. 1, sondern der Übersichtlichkeit halber lediglich den Hauptfunktionen zugeordnet. Der Grad der Detaillierung der Funktionen oder auch der Komponenten, die weitaus feiner dargestellt werden könnten, hängt vom jeweiligen Anwendungsfall ab. So könnte die Komponente "Bildschirm" weiter in ihre Bestandteile, wie beispielsweise Ablenksystem, Elektronenröhre, Netzteil, Netzkabel, Steuerung und Bildschirmgehäuse zerlegt werden. Das hier beschriebene Werkzeug lässt beliebige Detaillierungen zu. Der Detaillierungsgrad sollte vom jeweiligen Anwendungsfall und somit beispielsweise von der Wertschöpfungstiefe des zu betrachtenden Produktes abhängig gemacht werden. Bei hoher eigener Wertschöpfungstiefe eines Produktes ist es durchaus sinnvoll, die Produktkomponenten bis auf Schrauben, Dichtungen, Bolzen und sogar auf Halbzeuge, wie Bleche oder Rohstoffe, weiter zu verfeinern.

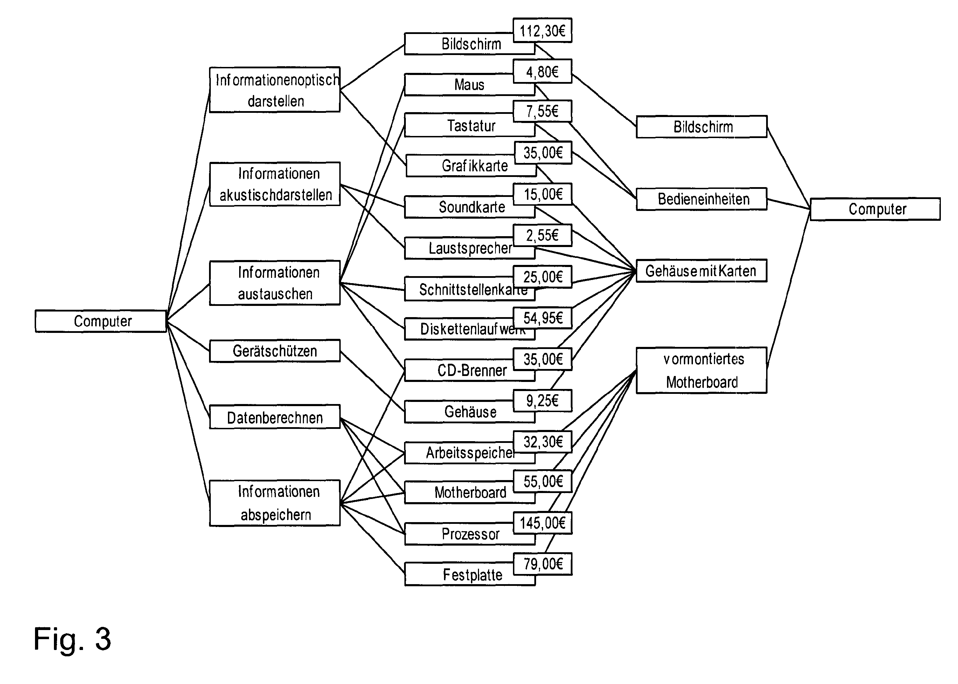

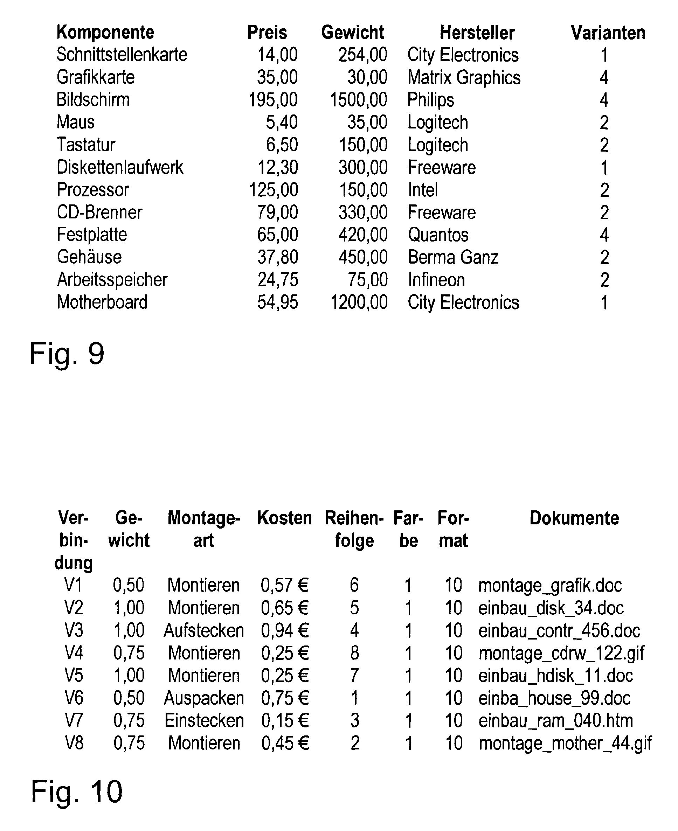

Erfindungsgemäß ist vorgesehen, dass jedem Element des Netzes eine oder mehrere zusätzliche Werte zugeordnet werden. Demgemäß steiit das hier beschriebene Werkzeug eine Funktion bereit, um einen oder mehrere dieser Werte direkt in die Netzstruktur einzublenden. Fig. 3 verdeutlicht dies am Beispiel des Computers, bei dem die Beschaffungskosten der Komponenten des Computers eingeblendet sind. Die Tabelle in Fig. 9 stellt exemplarisch dar, welche weiteren Werte in der Netzstruktur dargestellt sein könnten. Im genannten Beispiel sind jeder Komponente mehrere weitere Kategorien zugeordnet, die jeweils Werte wie beispielsweise Preis, Gewicht, Hersteller und Anzahl der Varianten beinhalten. Darüber hinaus lassen sich mit dem hier beschriebenen Werkzeug beliebige andere Kategorien mit Werten wie beispielsweise Kosten, Bruttopreis, Nettopreis, Stückzahl, Zulieferer, Namen, Adressen, Bemerkungen, Bilder, Hinweise oder aber Verweise auf Dokumente, Datenbanken oder ähnliche eingeben und verwalten. Das hier beschriebene Werkzeug bietet Funktionen zur freien Zuordnung von mindestens einer Kategorie zu jedem Element oder beispielsweise jeder Ebene des Netzes.

Die Netzstruktur hat unter anderem die Funktion, komplexe Zusammenhänge übersichtlich darzustellen und so am Beispiel des Computers für alle an der Entwicklung, Produktion und Umsetzung Beteiligten eine einfache und nachvollziehbare Basis zur gegenseitigen Information und zum Austausch zu schaffen. Demgemäß bietet das hier beschriebene Werkzeug umfangreiche Darstellungsmöglichkeiten für die diversen Datenstrukturen an.

Die praktische Erfahrung hat gezeigt, dass die übersichtliche Darstellung als Netzstruktur den bereichsübergreifenden Austausch zwischen den unterschiedlichen Beteiligten eines Projektteams, an denen beispielsweise Produktmanager, Marketingexperten, Produktionsplaner, Controller, Entwickler und Konstrukteure beteiligt sein können, erheblich unterstützt und erleichtert. Je nach Schwerpunkt der aktuellen Aufgabenstellung, wie Kostensenkung, Reduzierung der Montagezeiten oder Reduzierung der Anzahl der Zulieferer, können mit Hilfe des erfindungsgemäßen Verfahrens mit geringem Aufwand übersichtliche und umfassende Netzstrukturen erzeugt und mit entsprechenden Zusatzwerten wie beispielsweise Materialkosten der Komponenten versehen werden, noch bevor Entwicklungskapazitäten in CAD-Konstruktionen, Prototypen und Zeichnungen gesteckt werden. Bereichsübergreifende Workshops und Projektbesprechungen laufen mit Hilfe dieser Darstellungsform wesentlich zielgerichteter ab. Selbst sehr umfangreiche Strukturen und Zusammenhänge, wie beispielsweise bei Kraftfahrzeugen, Schienenfahrzeugen oder Industrieanlagen, können mit Hilfe von Digitalprojektoren direkt am PC bearbeitet und dargestellt werden oder in Form von großformatigen Ausdrucken umfassend abgebildet und erörtert werden.

Genauso wie die Elemente des Netzes, also beispielsweise Funktionen oder Komponenten, können auch die Verbindungen mit zusätzlichen Werten, wie beispielsweise Montagekosten, Prozesskosten, Maschinenzeiten, Montagereihenfolge, Montagearten oder Hinweisen, versehen und graphisch dargestellt werden (siehe die in Fig. 10 gezeigte Tabelle).

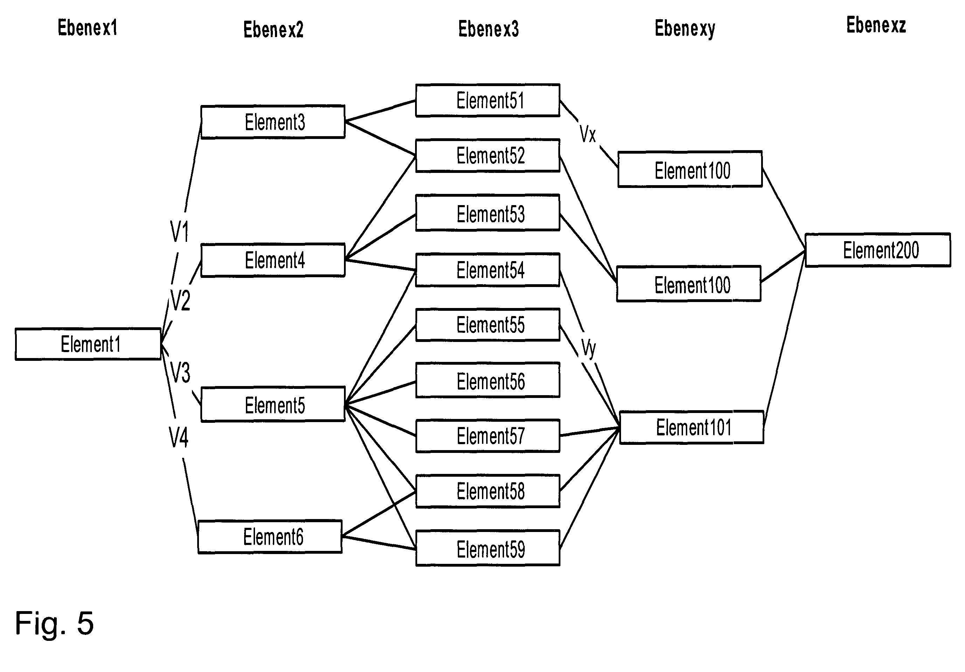

Erfindungsgemäß werden mindestens zwei hierarchische Netze verwendet und miteinander verknüpft, wobei jedes der Netze mindestens je zwei Netzebenen enthält. Die Netzebenen (x1, x2, x3, xy, xz) sind in Fig. 5 beispielsweise vertikal angeordnet und als Spalten dargestellt. Jede Netzebene oder Spalte enthält mindestens ein Element, das der Ebene eindeutig zugeordnet ist. So enthält die Ebene x3 in Fig. 5 die Elemente 3, 4, 5 und 6. Die Zuordnung eines Elementes zu einer Netzebene ist eindeutig, wobei jedoch das hier beschriebene Werkzeug eine Möglichkeit vorsieht, um die Zuordnung zu ändern. Jedem Element ist, wie beispielsweise in der in Fig. 9 gezeigten Tabelle, mindestens eine Kategorie, wie Komponente, Preis, Gewicht und Format zugeordnet, unter der Werte über das Element oder die mit dem Element im Kontext stehen, oder beispielsweise auch Datenbankenverweise zugeordnet sind. Ein oder mehrere Werte einer oder mehrerer Kategorien eines oder mehrerer Elemente können jeweils in der Netzdarstellung ein- oder ausgeblendet werden. Dementsprechend können Formatierungsangaben zur Darstellung der Elemente, wie Schriftfarbe, Schriftart oder beispielsweise Schriftgröße oder sonstige Formatierungsangaben als Kategorien mit Werten hinterlegt werden.

Der Bezug zwischen zwei Elementen wird, wie in Fig. 5 exemplarisch dargestellt, durch eindeutig identifizierbare Verbindungen V1, V2, V3, Vx und Vy zwischen diesen Elementen hergestellt. Von einem Element können mehrere Verbindungen ausgehen. Jeder Verbindung können eine oder mehrere Gewichtungen bzw. Gewichtsfaktoren zugeordnet werden, die eine Maßgröße für den Bezug zwischen zwei Elementen oder bestimmten Kriterien zweier Elemente darstellen. So weist die Verbindung V1 in der in Fig. 10 gezeigten Tabelle einen Gewichtsfaktor von 0,50 und die Verbindung V2 einen Gewichtsfaktor von 1,00 auf. Jede Verbindung ist eindeutig und ihr können beispielsweise unter mindestens einer Kategorie weitere Werte oder Informationen, wie beispielsweise Kosten der Montage, Montageart, Montagereihenfolge, Verweise, Datenbankzuweisungen oder auch Angaben zur Formatierung und Darstellung der Verbindung oder zugehöriger Werte zugeordnet werden.

Eine weitere Modellierungs- und Berechnungsfunktion des hier beschriebenen Werkzeugs besteht in der Zuweisung von Formeln, die den Elementen oder Verbindungen unter mindestens einer Kategorie zugeordnet werden können und die beispielweise mathematische Funktionen oder Algorithmen abbilden. So können beispielsweise die Fertigungskosten netzübergreifend berechnet und grafisch in das Netz eingeblendet werden, indem die Materialkosten von Komponenten, Baugruppen und Montageeinheiten unter der Kategorie Kosten, sowie die Montagezeiten, multipliziert mit dem entsprechenden Lohnkostensatz, sowie die Maschinen- und sonstigen Prozesskosten, die beispielsweise unter den entsprechenden Kategorien von Elementen und Verbindungen, aufsummiert werden.

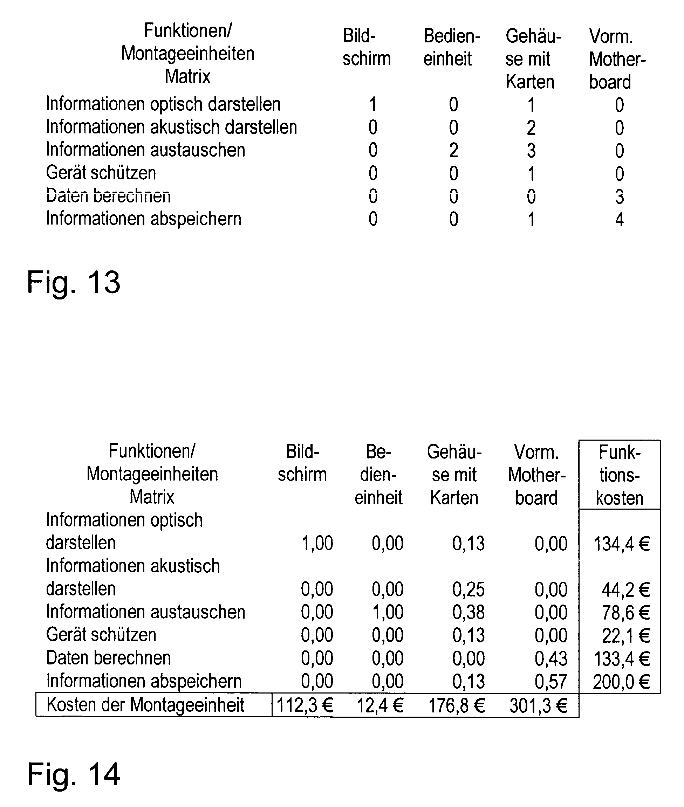

Die Zuweisung von Formeln zu Verbindungen und/oder Elementen ermöglicht sehr schnelle und flexible Berechnungen und Auswertungen, wie beispielsweise die Berechnung von Montage- und Prozesskosten über mehrere Netzebenen hinweg, oder auch die Berechnung von Funktionskosten, die in der in Fig. 14 gezeigten Tabelle auf Basis einer Funktionskostenmatrix berechnet sind.

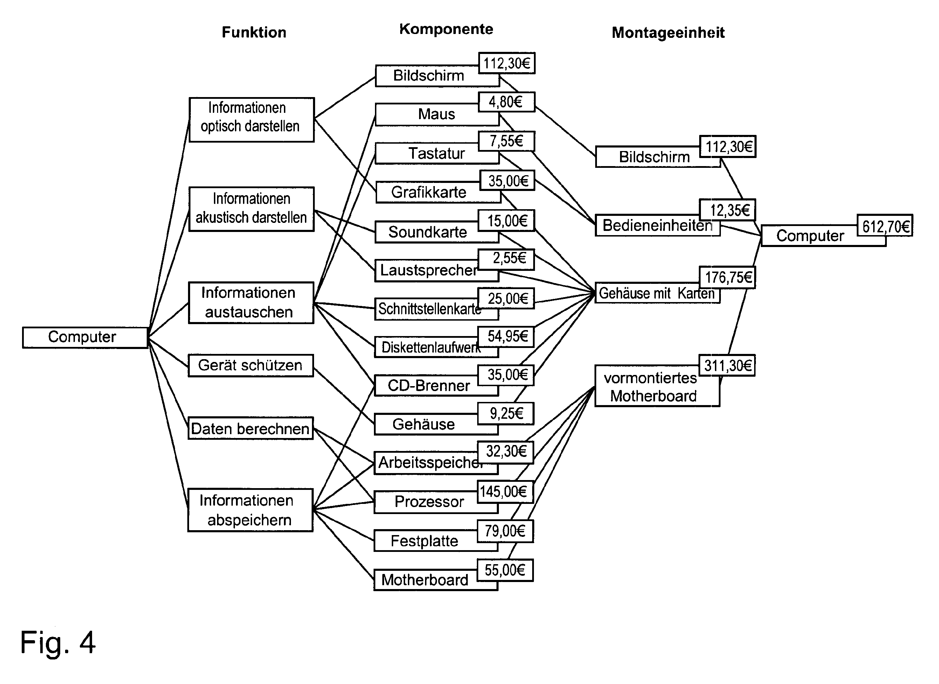

Aufgrund der eindeutigen Zuordnung der Elemente zu einer Netzebene, der eindeutigen Zuweisung von Informationen, Datenzuweisungen, Werten oder Formeln unter Kategorien und dem mit Hilfe der Verbindungen festgelegten Bezug zwischen den Elementen, sowie den Verbindungen zugeordneten Informationen, Datenzuweisungen, Werten oder Formeln, bietet das hier beschriebene Werkzeug die Möglichkeit, netzübergreifende Berechnungen und Auswertungen vorzunehmen und darzustellen. So lassen sich beispielsweise anhand der Netzstrukturen und Wertezuweisungen in Fig. 3 die Gesamtkosten über die Montageeinheiten bis zum Gesamtprodukt errechnen und beispielsweise wie in Fig. 4 in der Netzstruktur abbilden.

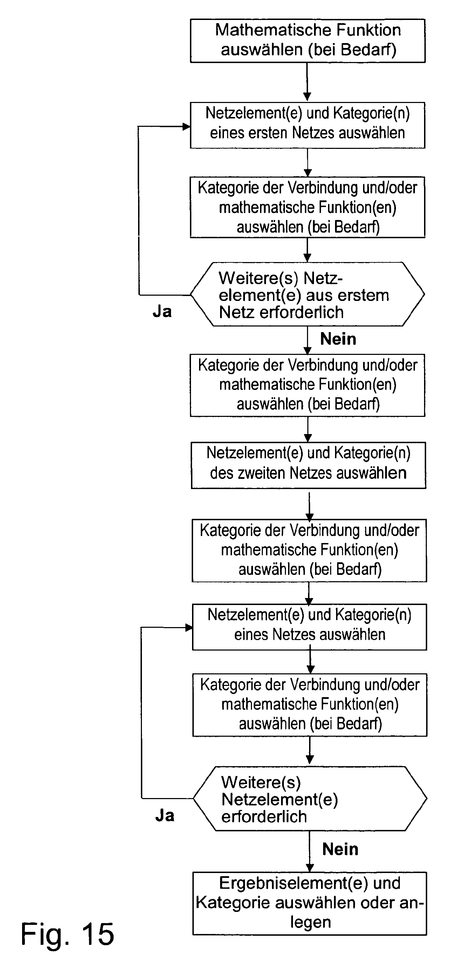

In dem in Fig. 15 gezeigten Flußdiagramm ist der Ablauf einer netzübergreifenden Werteberechnung - die beispielsweise das in Fig. 3 und Fig. 4 dargestellte Ergebnis haben kann - allgemein gezeigt. Netzelemente zur Berechnung können einzelne Elemente, wie beispielsweise eine Komponente oder eine Montageeinheit oder einzelne Verbindungen oder Gruppen von Elementen wie beispielsweise alle oder ein Teil der Elemente einer oder mehrerer Netzebenen oder Gruppen von Verbindungen sein. Die Verbindungen stellen den Bezug zwischen den Netzelementen von unterschiedlichen Netzebenen her. Jede Verbindung weist mindestens eine Kategorie wie beispielsweise die Kategorie Gewicht in Fig. 10 auf, die den quantitativen Bezug zwischen den Elementen unterschiedlicher Netzebenen und/oder unterschiedlicher Netze herstellt.

Mindestens eine Kategorie von Verbindungen kann beispielsweise über einen gesamten Bereich, über ein ganzes Netz oder auch über mehrere Bereiche in mehreren Netzen einheitlich definiert werden und so über diesen Bereich die Zuordnung zwischen den Netzelementen für mindestens eine Berechnung darstellen. Dementsprechend kann die Angabe beispielsweise einer Kategorie und einer zugehörigen mathematischen Funktion für alle Verbindungen bei einer netzübergreifenden Berechnung in diesem Bereich ausreichend sein.

Der Wert mindestens einer Kategorie der Verbindung mindestens zweier Netzelemente stellt in Kombination mit mindestens einer mathematischen Formel und beispielsweise in Kombinationen mit weiteren Werten und weiteren mathematischen Formeln den Bezug zwischen mindestens diesen Netzelementen her. Dementsprechend kann beispielsweise eine Verbindung den mathematischen Bezug zur einer benachbarten Verbindung herstellen. So lassen sich beispielsweise die Prozesskosten einer Verbindung, anteilig gemäß dem Gewichtsfaktor eben dieser Verbindung auf die Prozesskosten einer angrenzenden Verbindung herunter brechen und beispielsweise mitsamt der Prozesskosten dieser angrenzenden Verbindung summieren. So sind beispielsweise Berechnungen iterativ und über mehrere Netzebenen hinweg und beispielsweise netzübergreifend auf andere Netze möglich.

Der oder die Gewichtsfaktoren eines Netzelementes können je nach Art der Berechnung unterschiedlich sein. So addieren sich die Kosten für die Montageeinheit "Gehäuse mit Karten" in Fig. 4 beispielsweise aus den Kosten der zugehörigen Komponenten; der Gewichtsfaktor der zugehörigen Verbindung beträgt in diesem Beispiel 1, d.h. die Kosten der zugehörigen Komponenten addieren sich linear. Dem gegenüber verteilen sich die Kosten der Montageeinheit "Gehäuse mit Karten" nicht gleich auf die zugehörigen Komponenten, sondern die Grafikkarte trägt nur zu einem Anteil von 35 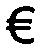 an den Gesamtkosten bei. Der Gewichtsfaktor der Verbindung von "Gehäuse mit Karten" zu der Komponente "Grafikkarte" beträgt also 35/176,75. Es kann vorgesehen sein, dass eine Kategorie mindestens einer Verbindung beispielsweise mit dem Gewichtsfaktor 1 vorbelegt ist.

Die Berechnungen können auf Basis von vordefinierten mathematischen Funktionen oder Text-, Datums-, Logik- oder Datenbankfunktionen, wie beispielsweise Summenfunktionen, Multiplikationen, Summenprodukten, Mittelwertberechnung, Anzahl der Elemente, Textverknüpfungen sowie Matrixfunktionen und Datenbankoperationen erfolgen. Funktionen können auch miteinander kombiniert und verknüpft werden. Je nach Funktion ist es deshalb notwendig, die Funktion vor Beginn des ersten Operators, nach dem ersten Operator oder auch nach der Auswahl des letzen Operators, wie zum Beispiel bei Klammerfunktionen aufzurufen.

Die beschriebene generische Struktur sieht die Auswahl und/oder das Anlegen von Ergebniselementen nach der Eingabe von Funktionen und Operanden vor. Eine oder mehrere Ergebniselemente können beispielsweise auch Werte von Kategorien bestehender Netzelemente sein. Die Ergebniselemente müssen nicht zwangsläufig Bestandteil eines hierarchischen Netzes sein, sondern sie können vielmehr lediglich zur Darstellung von Ergebnissen wie zum Beispiel der Anzahl der Zulieferer dienen.

In dem hier beschriebenen Ausführungsbeispiel ist ferner eine Funktionalität vorgesehen, um beispielsweise über einen oder mehrere Bereiche und ein oder mehrere Netze hinweg die Kategorien von Verbindungen zu vereinheitlichen und/oder beispielsweise die Werte dieser Kategorien mit Standardwerten zu belegen, um die netzübergreifende Berechnung über diesen Bereich zu standardisieren und für den Anwender weiter zu vereinfachen.

Die hier beschriebene Lösung unterscheidet sich von bisher bekannten Lösungen insbesondere dadurch, dass netzübergreifende Berechnungen erfolgen, die Werte von mindestens einem Element oder mindestens einer Verbindung aus einem ersten Netz auf mindestens ein Element oder eine Verbindung eines zweiten Netzes bezieht, derart, dass der mathematische Bezug zwischen mindestens diesen Elementen auf Basis mindestens eines Wertes mindestens einer Kategorie der zugehörigen und/oder direkten Verbindungen zwischen den Elementen der Netze erfolgt.

Ein Beispiel zur Berechnung eines Wertes ist die Summierung der Materialkosten von Montageeinheiten, addiert mit den Prozesskosten der nachfolgenden Verbindungen und den Montagezeiten, multipliziert mit den Stundensätzen der Montage, der nachfolgenden Verbindungen, die beispielsweise von einem ersten Netz auf ein oder mehrere Elemente eines zweiten Netzes heruntergebrochen werden.

Ein weiteres Beispiel zur Berechnung ist die Summe der Materialkosten aller 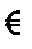 Komponenten mit mehr als 5,00 Einzelkosten oder der Anteil dieser Komponenten an den Gesamtkosten oder die Anzahl der Zulieferer von Komponenten und Baugruppen, die beispielsweise auf eine oder mehrere elektrischen Schnittstellen eines zweiten Netzes übertragen werden.

Ein weiterer Anwendungsfall ist die netzübergreifende Berechnung eines Endtermins oder einer Gesamtlaufzeit bei der Verkettung von einzelnen Prozessen oder Abläufen.

Neben der einfachen Summation von Materialkosten, Prozesskosten oder auch Montagekosten eröffnet die Netzstruktur weitere netzübergreifende Auswertungsmöglichkeiten. So bietet das hier beschriebene Werkzeug alle mathematischen Zuordnungen und Daten, um beispielsweise die Kosten von Komponenten oder Montageeinheiten auf Funktionen oder Teilfunktionen herunter zu brechen. Ausgehend von der in Fig. 4 abgebildeten Netzstruktur und der zugehörigen Datenstruktur, hält das hier beschriebene Werkzeug alle Werte zur Berechnung einer sogenannten Funktionskostenmatrix, wie sie beispielsweise aus dem Target Costing bekannt ist, vor.

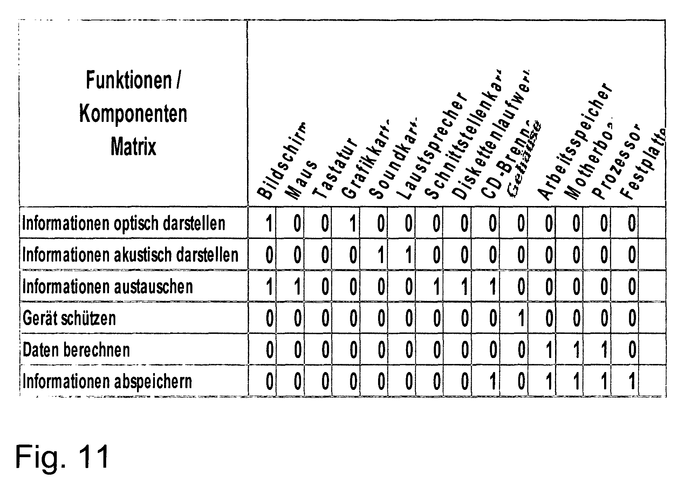

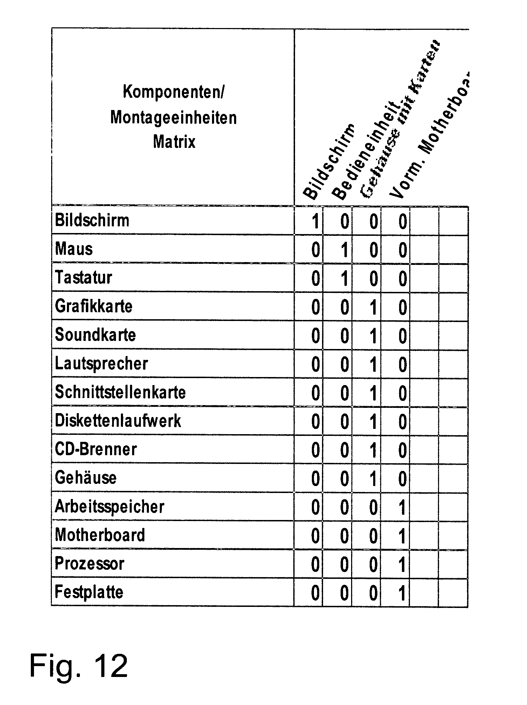

Die Funktionskostenmatrix zwischen den Funktionen und den Montageeinheiten aus Fig. 4 enthält man beispielsweise dadurch, dass zunächst eine Matrix zwischen der Netzebene der Funktionen und der der Komponenten (siehe die in Fig. 11 gezeigte Tabelle), und anschließend eine Matrix zwischen der Netzebene der Komponenten und der der Monatageeinheiten (siehe die in Fig. 12 gezeigte Tabelle) erzeugt wird. Die Matrixelemente in der Tabelle von Fig. 11 enthält man beispielsweise dadurch, dass eine Verbindung zwischen einer Funktion und einer Komponente aus der Netzstruktur in Fig. 3 mit dem Wert "1" eingetragen wird. Wenn keine Verbindung zwischen zwei Elementen besteht, so wird dem zugehörigen Matrixelement beispielsweise der Wert "0" zugeordnet. Das hier beschriebene Werkzeug bietet aber auch Funktionen an, um den Verbindungen einen oder mehrere Gewichtsfaktoren zuzuordnen, die den Wert der Matrixelemente darstellen. So wird dem zugehörigen Matrixelement beispielsweise nicht der Wert "1", sondern der Wert des entsprechenden Gewichtsfaktors, eines anderen zugeordneten oder berechneten Wertes zugewiesen.

Als Ergebnis der Multiplikation der beiden Matrizen, erhält man den spaltenübergreifenden Bezug zwischen den beiden nicht benachbarten Spalten. Das Ergebnis ist die in Fig. 13 gezeigte Matrix, die den Bezug zwischen den Funktionen und den Montageeinheiten darstellt. Damit lassen sich die Funktionskosten aus den zugeordneten Montageeinheiten und ihren Kosten berechnen. Die zugehörige Funktionskostenmatrix, die nach Normierung und Zuordnung der Kosten der Montageeinheiten aus der Tabelle von Fig. 13 entstanden ist, ist in der Tabelle in Fig. 14 dargestellt.

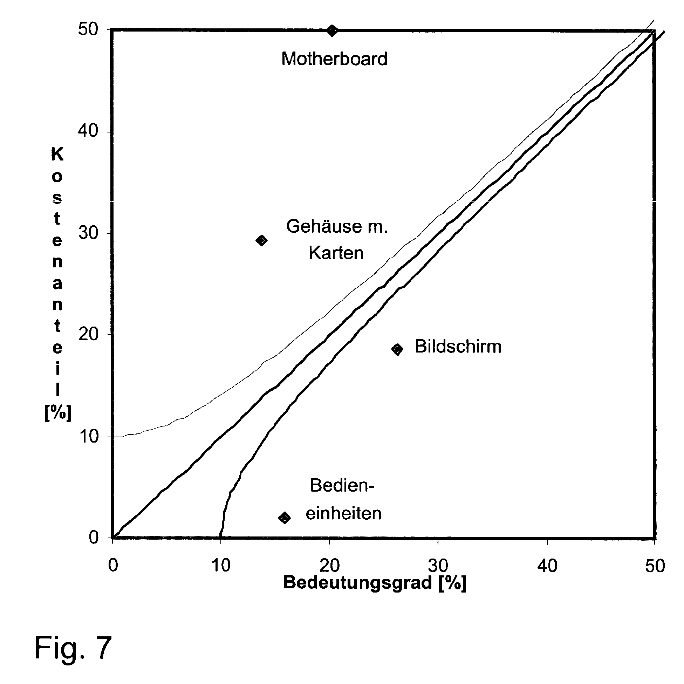

Funktionskostenmatrizen wie in Fig. 14 sind beispielsweise aus dem Target Costing bekannt. Die Funktionskostenmatrizen sind in der Regel nur zur mathematischen Abbildung der Zusammenhänge, beispielsweise wie in Fig. 4 zwischen Funktionen und Montageeinheiten, erforderlich. Die Ergebnisse werden meist nicht in Matrixform, sondern in Form eines Portfolios oder Zielkostenkontrolldiagramms (siehe Fig. 7) oder einer einfachen zweispaltigen Ergebnistabelle dargestellt. Der wesentliche Nachteil beim Target Engineering ist, dass die je nach Anwendung sehr umfangreichen Funktionskostenmatrizen manuell ausgefüllt und bearbeitet werden müssen. Gerade in interdisziplinären Teams bereitet das Bearbeiten von unübersichtlichen Matrizen immer wieder erhebliche Akzeptanz- und Verständnisprobleme. Zudem zeigt die Praxis, dass solche Matrizen in der Regel dünn besetzt sind und die meisten Matrixelemente den Wert Null aufweisen.

Das hier beschriebene Werkzeug umgeht diese Nachteile, indem die Ausgangsdaten zur Erstellung der Funktionskostenmatrix nicht in Matrixform, sondern mit Hilfe einer Netzstruktur erhoben und abgebildet werden. Über die durch die reine Automatisierung zu erwartenden Vorteile stellt das hier beschriebene Werkzeug damit eine besonders vorteilhafte Benutzerschnittstelle bereit, die es ermöglicht, umfangreichere und genauere Modellierungen und Berechnungen durchzuführen. Die Netzstruktur ist nämlich für den menschlichen Betrachter wesentlich besser nachvollziehbar als eine Matrix. Das wirkt sich insbesondere bei längeren Meetings sehr positiv auf die Aufmerksamkeit der Teilnehmer aus. Darüber hinaus enthält das Netz im Gegensatz zu einer dünn besetzen Matrix nur relevante Verbindungen und Werte.

Die grafische Darstellung aller wesentlichen Gesamtzusammenhänge und die einfache und flexible Ergänzung, Einblendung und Änderung von Zusammenhängen oder Werten bietet eine ideale Basis zum übergreifenden und effizienten Informationsaustausch. Darüber hinaus bietet die einfache und nachvollziehbare Struktur gerade in der frühen Phase der Entwicklung eine hervorragende Basis, beispielsweise alternative Produktkonzepte, Bauraumkonzepte, Montagekonzepte, Schnittstellenkonzepte oder andere bereichsübergreifend zu diskutieren, Alternativen zu simulieren, neue Lösungswege zu entwickeln und daraus gemeinsam abgestimmte Gesamtkonzepte zu erarbeiten. Das hier beschriebene Werkzeug ist hervorragend als Informations- und Kommunikationsplattform geeignet, um komplexe Sachverhalte einfach und übersichtlich darzustellen und auf dieser Basis auch neue Lösungswege zu erarbeiten.

Die Konzeption und Überarbeitung von Modulstrukturen, Gleichteil- und Plattformbildung, stellt einen weiteren praktischen Anwendungsschwerpunkt des hier beschriebenen Werkzeugs dar. Die übersichtliche Art der graphischen Darstellung und der ganzheitlichen Verknüpfung von Funktionsstrukturen mit Baustrukturen sowie der Werteberechnung vereinfacht die gezielte Plattformbildung und Modularisierung von komplexen Produkten. Insbesondere die mathematische netzübergreifende Zuordnung von Kundenfunktionen, Kundenanforderungen und Anforderungsvarianten zu den Komponenten der Baustruktur bietet Möglichkeiten zur rechnergestützten Optimierung und gibt Handlungsempfehlungen für die Plattformbildung und die Zusammenfassung zu Modulen. So können die kundenindividuellen Anforderungen, die z.B. aus Marktanalysen oder Befragungen hervorgehen, beispielsweise als Varianzindikator der Kundenfunktion zugeordnet werden. Auf Basis der nach dem erfindungsgemäßen Verfahren abgebildeten mathematischen Beziehungen können die Varianzindikatoren auf jede Netzebene, wie beispielsweise Komponenten-, Montageeinheiten- oder Modulebene hochgerechnet werden. So lassen sich Montageund Modulstrukturen simulieren, bewerten und mit Hilfe von mathematischen Optimierungsverfahren Vorschläge für solche Strukturen ableiten, die mit möglichst wenigen kundenspezifischen Modulen ein Maximum an kundenindividuellen Produkten abdecken.

Neben Target Costing sind etliche weitere Methoden, wie die Wertanalyse, das Quality Functional Deployment oder FMEA (Failure Modes and Effects Analysis), oder auch Design-Struktur-Matrizen und Lanner-Matrizen bekannt, die auf Basis von umfangreichen Matrizen oder Tabellen systematisch Zusammenhänge zwischen Kundenanforderungen, Funktionen, Teilfunktionen, Komponenten, Eigenschaften von Komponenten, Baugruppen oder Modulen erheben.

Der wesentliche Nachteil dieser Verfahren ist jedoch, dass die Erhebung, Bearbeitung und Auswertung nicht auf einer gemeinsamen Informations- und Datenbasis erfolgt und dass die erhobenen Tabellen und Matrizen gar nicht oder nur zum Teil miteinander verknüpft werden. Das hier beschriebene Werkzeug stellt eine ganzheitliche Grundlage zur Verfügung, die den gesamten Wertschöpfungsprozess und mitsamt beliebigen zusätzlichen Werten und Informationen mathematisch und graphisch abbilden kann und das Eingeben und Überarbeiten von komplexen Zusammenhängen auf grafischer Ebene sowie die Werteberechnung ermöglicht. Damit kann das Bearbeiten und Korrigieren von umfangreichen Matrizen umgangen werden. Das hier beschriebene Werkzeug lässt beispielsweise das vollständige oder teilweise Ein- oder Ausblenden von ganzen Netzebenen oder Netzstrukturen, wie beispielsweise die Teilfunktionen in Fig. 2, zu und ermöglicht eine einfache und übersichtliche Darstellung komplexer Zusammenhänge. Darüber hinaus können aber auch weitere Spalten oder weitere Netze mit eigenen funktionalen, technischen oder organisatorischen Zusammenhängen ergänzt und eingefügt werden.

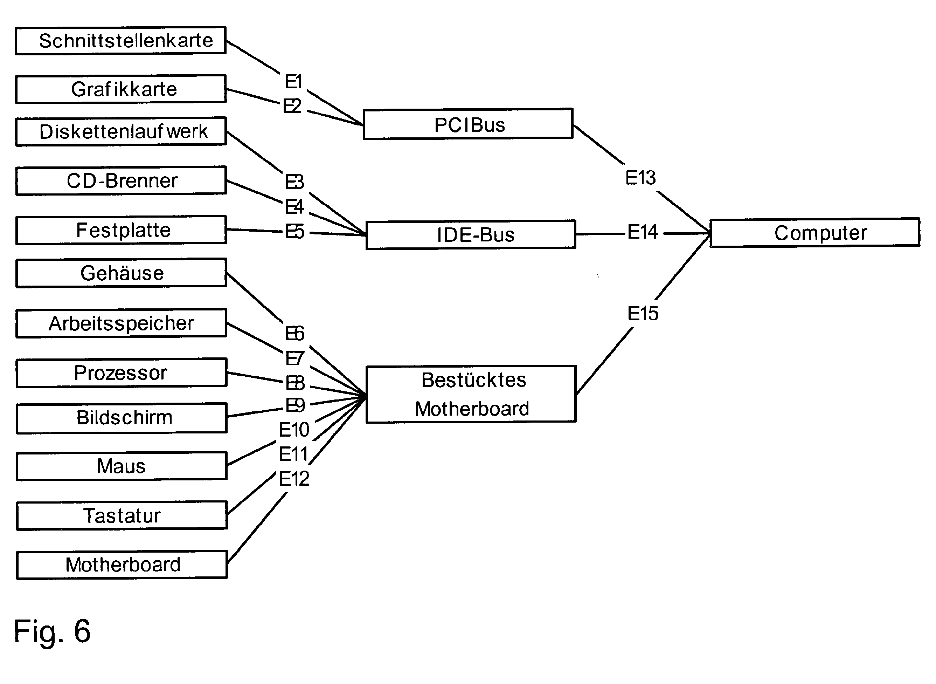

Ein häufig auftretendes Problem bei komplexen Produktentwicklungen und insbesondere im Anlagenbau oder bei Fahrzeugen ist beispielsweise die Nachvollziehbarkeit von elektrischen Signalpfaden und elektrischen oder optischen Schnittstellen. Die generische Struktur des hier beschriebenen Werkzeugs ist hervorragend geeignet um die Struktur von elektrischen Signalpfaden systematisch und übersichtlich, wie z.B. in Fig. 6, darzustellen. Die elektrische Signalstruktur kann bei dem hier beschriebenen Werkzeug am Beispiel des Computers beispielsweise als drittes hierarchisches Netz hinterlegt und bei der Darstellung selektiv ein- oder ausgeblendet werden. Das hier beschriebene Werkzeug ermöglicht so die Simulation, Bewertung und Optimierung von elektrischen Schnittstellen beispielsweise in Abhängigkeit der Varianzanforderungen der Kunden.

Gerade in der Fahrzeugindustrie herrscht immer wieder das Problem, Bauraumkonflikte systematisch zu erfassen, zu analysieren und auch mit vielen am Entwicklungs- und Konstruktionsprozess Beteiligten auszutauschen, noch bevor CAD-Zeichnungen vorliegen. Auch hier eignet sich das hier beschriebene Werkzeug hervorragend, um komplexe Bauraumstrukturen, beispielsweise in Form eines weiteren hierarchischen Netzes, abzubilden und zu bearbeiten. Das hier beschriebene Werkzeug stellt einen ganzheitlichen Lösungsansatz dar, der auf mindestens zwei hierarchischen Netzen aufgebaut ist, die beispielsweise Kundenfunktionen, Kundenanforderungen, Varianzanforderungen, Produkt- und Montagestrukturen oder auch elektrische Signalstrukturen, Bauraumstrukturen, sowie Informationsstrukturen abbilden können und so die systematische Erfassung, Überarbeitung, Berechnung, Simulation und Optimierung auf Basis einer grafischen Netzdarstellung ermöglicht.

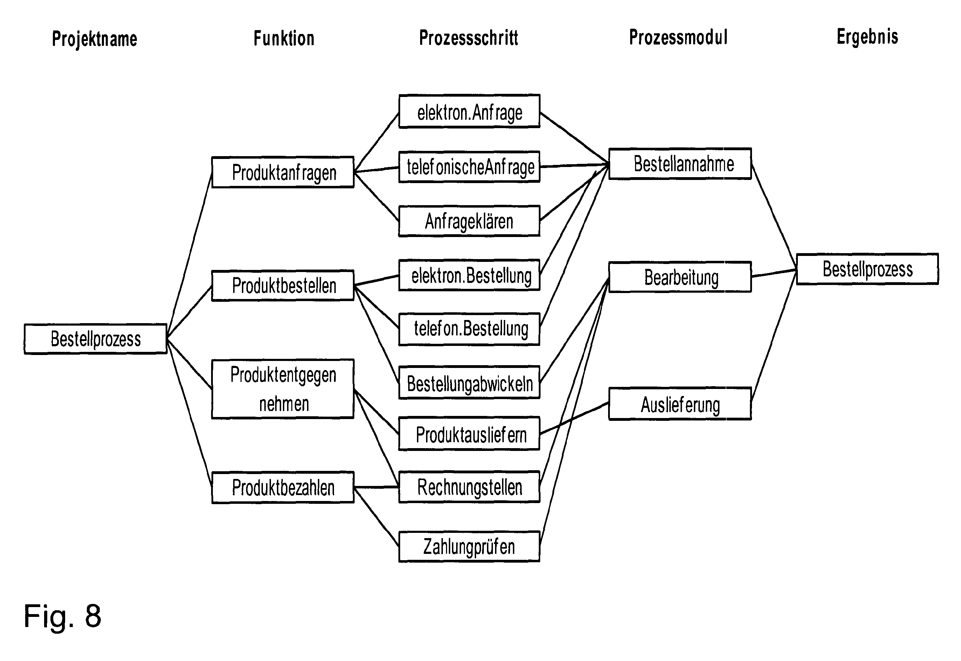

Das hier beschriebene Werkzeug lässt sich nicht nur für die Erfassung, Überarbeitung, Berechnung, Simulation und Optimierung im Zusammenhang mit physischen Produkten, wie Schienenfahrzeugen oder Investitionsgütern anwenden, sondern auch im Zusammenhang mit Softwareprodukten, Prozessen und Dienstleistungen, wie in Fig. 8 am Beispiel eines allgemeinen Produktbestellprozesses dargestellt.

## Patentansprüche

1. Verfahren zur Berechnung mindestens eines Wertes durch eine Datenverarbeitungseinrichtung unter Verwendung mindestens zweier hierarchischer Netze, wobei:
- jedes hierarchische Netz mindestens zwei Netzebenen mit je mindestens einem Element aufweist,
- jedes Element mindestens eine Verbindung zu einem weiteren Element aufweist,
- jedes hierarchische Netz mindestens eine gemeinsame Netzebene zu mindestens einem weiteren hierarchischen Netz aufweist,
- jedes Element mindestens einen Wert unter mindestens einer festgelegten Kategorie aufweist, und
- die Berechnung des mindestens einen Wertes in Abhängigkeit von mindestens einem anderen Wert erfolgt, der sich in einem anderen Netz als der zu berechnende Wert befindet, so dass die Berechnung netzübergreifend mit Werten versorgt wird.

2. Verfahren nach Anspruch 1, **dadurch gekennzeichnet, dass** ferner zumindest manche Verbindungen einen Wert aufweisen.

3. Verfahren nach Anspruch 2, **dadurch gekennzeichnet, dass** die Berechnung des mindestens einen Wertes unter Einbeziehung mindestens eines Wertes mindestens einer Verbindung erfolgt.

4. Verfahren nach Anspruch 2 oder Anspruch 3, **dadurch gekennzeichnet, dass** der berechnete Wert ein Wert eines Elementes oder einer Verbindung ist.

5. Verfahren nach einem der Ansprüche 1 bis 4, **dadurch gekennzeichnet, dass** die Zuordnung der Elemente zweier Netze in der mindestens einen gemeinsamen Netzebene dadurch erfolgt, dass Elemente und/oder Verbindungen, die bezüglich einer vorgegebenen Kategorie Werte aufweisen, welche in einer vorgegebenen Beziehung zueinander stehen, einander zugeordnet werden.

6. Verfahren nach Anspruch 5, **dadurch gekennzeichnet, dass** die vorgegebene Beziehung die Gleichheit ist.

7. Verfahren nach einem der Ansprüche 1 bis 6, **dadurch gekennzeichnet, dass** der mindestens eine Wert durch Auswertung mindestens einer programmierbaren Formel berechnet wird.

8. Verfahren nach Anspruch 7, **dadurch gekennzeichnet, dass** mindestens ein Wert mindestens eines Elementes oder mindestens einer Verbindung eindeutig indiziert und als Parameter in mindestens einer Formel hinterlegt ist.

9. Verfahren nach Anspruch 7 oder Anspruch 8, **dadurch gekennzeichnet, dass** mindestens ein Ergebnis mindestens einer Formel keinem Element und keiner Verbindung zugeordnet ist.

10. Verfahren nach einem der Ansprüche 7 bis 9, **dadurch gekennzeichnet, dass** mindestens ein Ergebnis mindestens einer Formel alle Elemente mindestens einer Spalte eines der hierarchischen Netze umfasst.

11. Verfahren nach einem der Ansprüche 1 bis 10, **dadurch gekennzeichnet dass** die Berechnung des mindestens eines Wertes auf mindestens einer Matrix beruht, die auf Basis von Verbindungen oder Werten mindestens einer Kategorie von Verbindungen zwischen mindestens zwei Spalten der hierarchischen Netze gebildet wird.

12. Verfahren nach einem der Ansprüche 1 bis 11, **dadurch gekennzeichnet dass** mindestens ein Netz oder ein Teil eines Netzes dahingehend optimiert wird, die Anzahl der Überschneidungen zwischen den Verbindungen in diesem Netz oder in einem Teil dieses Netzes zu minimieren.

13. Verfahren nach einem der Ansprüche 1 bis 12, **dadurch gekennzeichnet dass** jedes Element eine eindeutige Identifizierung aufweist, und/oder dass jede Verbindung eine eindeutige Identifizierung aufweist.

14. Verfahren nach einem der Ansprüche 1 bis 13, **dadurch gekennzeichnet, dass** die Eingabe, Änderung oder Auswertung von Elementen und/oder Kategorien und/oder Elementwerten und/oder Verbindungen zwischen Elementen und/oder Kategorien und/oder Verbindungswerten ganz oder teilweise graphisch erfolgt.

15. Verfahren nach einem der Ansprüche 1 bis 14, **dadurch gekennzeichnet, dass** Elemente und/oder Elementwerte und/oder Verbindungen und/oder Verbindungswerte graphisch angezeigt werden, wobei die graphische Anzeige in Abhängigkeit von mindestens einem Wert eines Elements und/oder einer Verbindung und/oder in Abhängigkeit von der direkten und/oder indirekten Nachbarschaft oder der direkten und/oder indirekten Verbindung zu mindestens einem Element oder mindestens einer Verbindung erfolgt.

16. Verfahren nach Anspruch 15, **dadurch gekennzeichnet, dass** mindestens ein Formatierungsparameter bei der graphischen Anzeige der Elemente und/oder Elementwerte und/oder Verbindungen und/oder Verbindungswerte von mindestens einem Wert eines Elements und/oder einer Verbindung abhängt.

17. Verfahren nach Anspruch 16, **dadurch gekennzeichnet, dass** der mindestens eine Formatierungsparameter eine Rahmenfarbe und/oder eine Hintergrundfarbe und/oder ein Hintergrundmuster und/oder eine Linienstärke und/oder eine Linienstruktur und/oder ein Linienformat und/oder dargestellte Grafiken, Bilder oder Symbole und/oder deren Größe oder Position bestimmt.

18. Verfahren nach einem der Ansprüche 1 bis 17, **dadurch gekennzeichnet, dass** mindestens ein Netz oder ein Teil eines Netzes nach den Werten mindestens einer Kategorie von Elementen und/oder den Werten mindestens einer Kategorie von Verbindungen sortiert und dargestellt wird.

19. Verfahren nach einem der Ansprüche 1 bis 18, **dadurch gekennzeichnet, dass** das Verfahren zur Darstellung Planung, Simulation und/oder Optimierung von komplexen technischen Produkten, Prozessen oder Dienstleistungen dient.

20. Verfahren nach einem der Ansprüche 1 bis 19, **dadurch gekennzeichnet, dass** die hierarchischen Netze und/oder die Netzelemente und/oder die Elementwerte und/oder die Kategorien und/oder die Verbindungen in wenigstens einer Datenbank abgespeichert werden.

21. Vorrichtung mit mindestens einem Computer, der dazu eingerichtet ist, ein Verfahren nach einem der Ansprüche 1 bis 20 auszuführen.

22. Computerprogrammprodukt, insbesondere computerlesbarer Datenträger, das Programmbefehle aufweist, die einen Computer dazu veranlassen, ein Verfahren nach einem der Ansprüche 1 bis 20 auszuführen.
